# FASCICULE DE BREVET EUROPEEN

(11) **EP 2 507 796 B1**
(45) Date de publication et mention de la délivrance du brevet: **07.01.2015**
(21) Numéro de dépôt: 10787098.2
(22) Date de dépôt: 01.12.2010
(51) Int. Cl.: G21C 3/06, G21C 3/18, G21C 21/02, G21C 3/07, G21C 3/60, G21C 3/62

(54) **CRAYON DE COMBUSTIBLE NUCLÉAIRE ET PROCÉDÉ DE FABRICATION DE PASTILLES D'UN TEL CRAYON**
KERNBRENNSTAB UND VERFAHREN ZUR HERSTELLUNG VON PELLETS FÜR EINEN DERARTIGEN BRENNSTAB
NUCLEAR FUEL ROD AND METHOD FOR MANUFACTURING PELLETS FOR SUCH A FUEL ROD

(30) Priorité: 04.12.2009 FR 0958661
(43) Date de publication de la demande: 10.10.2012
(73) Titulaire: Commissariat à l'Énergie Atomique et aux Énergies Alternatives, 75015 Paris (FR)
(72) Inventeur: RAVENET, Alain, F-83560 Vinon-sur-Verdon (FR)
(74) Mandataire: Ilgart, Jean-Christophe
(86) Numéro de dépôt international: PCT/EP2010/068611
(87) Numéro de publication internationale: WO 2011/067274

(56) Documents cités:
- DE-A1- 2 152 132
- GB-A- 989 889
- JP-A- 51 035 884
- US-A- 3 133 000
- US-A- 3 575 803
- US-A- 6 014 418
- US-A1- 2008 185 743

## Description

### DOMAINE TECHNIQUE

L'invention concerne un nouveau type de crayon de combustible nucléaire.

Les applications visées pour ce nouveau type de crayon de combustible nucléaire sont aussi bien les réacteurs nucléaires à eau pressurisée (REP) que les réacteurs nucléaires à neutrons rapides (RNR) refroidis au gaz (RNR-gaz), dits de IV^{ème} génération.

Par « réacteurs nucléaires », dans l'ensemble de la demande, on comprend le sens usuel du terme à ce jour, à savoir des centrales de production d'énergie à partir des réactions de fission nucléaires utilisant des éléments combustibles dans lesquels se produisent les fissions qui libèrent la puissance calorifique, cette dernière étant extraite des éléments par échange thermique avec un fluide caloporteur qui assure leur refroidissement.

Par « crayon de combustible nucléaire », dans l'ensemble de la demande, on comprend le sens officiel défini par exemple, dans le dictionnaire des Sciences et Techniques nucléaires, à savoir un tube étroit de faible diamètre, fermé à ses deux extrémités, constituant du coeur d'un réacteur nucléaire et contenant de la matière fissile. Ainsi, une « aiguille de combustible nucléaire » dont l'usage privilégie l'appellation est un crayon de combustible nucléaire au sens de la présente invention.

L'invention propose ainsi une nouvelle conception de crayons de combustible nucléaire au comportement thermomécanique amélioré en situations d'interaction mécanique entres les pastilles combustibles et la gaine.

### ART ANTÉRIEUR

Différents types d'éléments combustibles existent en fonction des conditions de fonctionnement et des performances des réacteurs. Les centrales dites de III^{ème} génération, les réacteurs REP notamment, utilisent des éléments combustibles de type crayon à section transversale circulaire.

L'inventeur a envisagé une amélioration d'un concept d'élément combustible.

Aussi, il a tenté d'abord de cerner les principes de conception et de comprendre les limites de fonctionnement de tous les éléments combustibles connus.

Les principales fonctionnalités que doit assurer un élément combustible sont :
- avoir une teneur volumique en atomes fissiles compatible avec les conditions de fonctionnement neutronique et la densité de puissance volumique du volume réactif,
- assurer le transfert thermique entre le matériau combustible et le fluide caloporteur,
- confiner les produits de fission solides et gazeux relâchés par le combustible pendant le fonctionnement du réacteur. En effet, les réactions de fission au sein du combustible génèrent des produits de fission solides et gazeux qui provoquent un gonflement de la structure du matériau qui peut être important. Le phénomène de gonflement, notamment gazeux, est activé par la thermique qui induit également des mécanismes de relâchement des gaz de fission en dehors du matériau combustible. Le gainage de l'élément combustible doit donc être capable d'accommoder ces déformations et relâchements gazeux du combustible sans perdre son intégrité.

La densité des fissions au sein du combustible est directement corrélée à la puissance volumique qu'il faut évacuer vers le caloporteur au travers de la gaine.

Il faut donc avoir la plus faible résistance thermique entre la source de chaleur et le caloporteur pour limiter la température maximale du combustible et les effets induits par ce flux de chaleur : gradient dans les matériaux et dilatations différentielles entre le combustible et la gaine.

La densité de matière fissile dans le volume réactif dépend principalement de la forme des éléments qui limite leur capacité à être arrangés dans un volume donné en visant un taux de remplissage maximal, tout en ayant la perméabilité nécessaire au caloporteur pour assurer l'évacuation de la puissance produite par les éléments avec une perte de charge acceptable.

Les éléments combustibles de base classiquement rencontrés dans les installations nucléaires peuvent être classés en trois types, élément de type plaque (de toutes formes), élément de type cylindrique élancé suivant la direction de l'axe (section le plus souvent circulaire ou annulaire) qui constitue un élément d'un crayon, et élément de type sphérique, le plus souvent sous la forme de particule de faible diamètre (taille millimétrique).

Par ailleurs, des éléments combustibles composites élaborés à partir des particules sphériques enrobées dans une matrice inerte existent sous les trois formes géométriques précédentes de boulet, de plaque et compactes des réacteurs à haute température (HTR).

Chacun de ces trois types d'éléments combustibles combine des solutions différentes aux problèmes posés et fait l'objet de compromis de choix de conception pour son domaine de fonctionnement. Le domaine de fonctionnement de chaque élément combustible est de fait limité par les performances de la conception retenue.

Ainsi, les plaques comportent des gaines qui se comportent comme des coques à fort élancement (rapport entre la longueur libre de la coque et son épaisseur).

Le matériau de gainage adapte, par sa malléabilité, sa géométrie à celle de la partie centrale combustible, ce qui permet l'accommodation des déformations différentielles (gonflement et dilatation) entre le matériau combustible et la gaine, transversalement et à très faible niveau de contraintes. Cette structure de plaque présente cependant une faible capacité à contenir les déformations que lui impose le combustible dans le sens de l'épaisseur à cause de la très faible raideur des gaines transversalement à leur plan. Cette liberté permet au combustible de se déformer de manière anisotrope, préférentiellement dans cette direction. Par ailleurs, cette structure est également très instable en flambage dans le cas où des efforts de compression s'exerceraient dans son plan, globalement ou localement (sur un point chaud par exemple), particulièrement, dans les cas où l'âme combustible n'est pas, ou faiblement, liée aux gaines.

Le bon contact thermique entre le combustible et la gaine est recherché pour maintenir le combustible dans un domaine de température suffisamment bas pour que, dans toutes les situations de fonctionnement, il ne relâche pas ses produits de fission gazeux.

Les éléments plaques ne sont donc utilisés que pour des combustibles froids, c'est-à-dire dans le domaine de température où le matériau combustible ne relâche pas ses gaz et à des niveaux modérés de la puissance volumique.

Les paramètres d'optimisation des plaques portent généralement, pour un niveau de puissance volumique visé, sur l'épaisseur de la plaque et la qualité du contact combustible/gaine, sur la maîtrise de la corrosion de la gaine et sur la non dégradation de ses propriétés de ductilité en fonctionnement.

Aussi, les principaux modes de ruine de ces éléments sont liés soit à un manque de ductilité du gainage en déformation imposée (dégradation par corrosion ou durcissement sous irradiation), soit à un accroissement de la résistance thermique entre le combustible et le caloporteur (zone corrodée résistive sur la gaine, décohésion combustible/gaine avec ouverture d'un jeu par flambage local de la gaine par exemple) qui provoque un échauffement du combustible avec relâchement de gaz de fission et mise en pression interne du gainage conduisant à la rupture par instabilité en déformation de la gaine.

Les éléments cylindriques comprennent les cartouches utilisées dans des réacteurs graphite/gaz, les crayons utilisés dans les réacteurs à eau pressurisée (REP) ou les aiguilles des réacteurs à neutrons rapides (RNR) par exemple.

Dans ces éléments cylindriques, un jeu radial existe par construction entre le combustible sous forme de pastilles et la gaine à l'intérieur de laquelle elles sont empilées, jeu qui permet l'accommodation des déformations différentielles entre le matériau combustible et la gaine : ce jeu est capable, au minimum, de compenser les dilatations différentielles lors de la première montée en puissance de l'élément et la part du gonflement du combustible non résorbable par lui-même par fluage et redensification sur ses cavités internes, c'est-à-dire les cavités constituées par le trou central et par ses porosités. Aussi, le matériau combustible doit fonctionner à une température lui permettant d'activer ces mécanismes d'accommodation de ses déformations.

En contre partie, il relâche une partie de ses gaz de fission.

Un deuxième volume d'expansion est ménagé dans la gaine, en extrémité de l'empilement des pastilles de combustible afin de limiter la pression interne dans l'élément.

Les principaux paramètres d'optimisation de ces éléments cylindriques sont le jeu radial initial entre le combustible et la gaine, c'est-à-dire le jeu radial au montage, la qualité du fluide assurant la liaison thermique entre le combustible et la gaine (joint gazeux ou joint métallique fondu), la densité de remplissage effective du combustible dans la section de la gaine qui est définie à la fois par le jeu radial, les porosités, les vides tels que le trou central et/ou les évidements lenticulaires (ou « dishings » en anglais) en extrémités longitudinales de pastille, la raideur de la gaine (épaisseur) et les propriétés mécaniques (limite de résistance et ductilité) et lois de comportement (gonflement et fluage) des matériaux de gaine et combustible.

Le jeu radial pastille/gaine rempli de gaz et l'épaisseur de la gaine constituent une résistance thermique radiale qui conditionne le transfert thermique entre le caloporteur et les pastilles combustibles.

La résistance thermique est variable en fonctionnement puisque il y a une évolution du jeu radial et une dégradation de la conductibilité due au relâchement des gaz de fission. Cette variation de résistance thermique complique la maîtrise de la température maximale du combustible à atteindre, qui est dictée par le fait que dans toutes les situations de fonctionnement le matériau combustible ne doit pas atteindre sa limite en fusion. En outre, le fonctionnement en « enceinte en pression » de ce type d'élément implique l'utilisation de matériau capable d'assurer la tenue mécanique de l'élément sans risque de rupture brutale (instantanée et/ou différée) en pression. Pour ce faire, la section circulaire, qui présente la meilleure résistance à la pression, est la plus souvent adoptée : ainsi en situation d'interaction mécanique entre le combustible et la gaine, celle-ci oppose une raideur de frettage importante par sa mise en traction circonférentielle, le combustible se trouve alors bloqué dans ses deux directions radiales, seule sa direction axiale est partiellement libre, cette liberté partielle dépendant du niveau d'accrochage entre pastilles et la gaine.

Cette pression circonférentielle exercée par la gaine sur le combustible active ses mécanismes de réarrangement sur lui-même, c'est-à-dire la redensification sur lui-même.

Le choix du matériau de gaine est donc primordial puisqu'il doit avoir à la fois une résistance à la rupture suffisante dans le domaine de température de fonctionnement visé, une ductilité en plasticité et en fluage thermique et une ténacité suffisante, typiquement supérieure à 20 MPa. √m dans une gamme de température correspondant à tout le domaine de fonctionnement des éléments de combustible. Les conditions limites de fonctionnement de ces éléments (températures et puissance volumique) sont donc fixées par le choix du gainage (limite de résistance en instantané et en fluage en fonction de la température) et celui du matériau combustible (température de fusion).

Le principal mode de ruine résiduel associé à ce type d'éléments est l'interaction mécanique combustible/gaine instantanée dépassant la capacité de déformation de la gaine, par exemple en situations de remontée en puissance du réacteur à un niveau supérieur à celui du fonctionnement précédent ou dans un régime de fonctionnement où la température du combustible n'active pas ou peu ses mécanismes d'auto accommodation de ses propres déformations.

Enfin, les éléments sphériques, tels que ceux comprenant les particules utilisées dans des réacteurs à haute température (ou « High Température Reactor » en anglais, d'abréviation HTR), différentes couches d'enrobage sont successivement déposées sur un noyau fissile qui doit être centré. Pour assurer cela, des vides sont créés sous forme de porosités au sein du noyau fissile et dans une couche intermédiaire, appelée « buffer », à très forte porosité et qui assure la continuité initiale entre le noyau fissile et les couches de gainage.

L'accommodation des déformations différentielles entre le combustible et la gaine, c'est-à-dire la couche de revêtement, se fait par comblement des vides : en fonctionnement, la densification progressive du buffer sous flux de neutrons libère un jeu radial permettant d'empêcher l'interaction mécanique forte entre le noyau fissile et les couches de gainage. De plus, les volumes libres internes au gainage retiennent les gaz de fission relâchés par le fissile : la forme sphérique de la gaine est alors bien adaptée pour résister à la pression interne qui s'établit.

Les paramètres d'optimisation des particules élémentaires sont essentiellement dans le choix des matériaux (nature, structure, propriétés et lois de comportement sous flux neutronique et en température) et de l'épaisseur des différentes couches.

Ces éléments combustibles sphériques ne sont utilisés que dans des réacteurs à flux thermique et refroidis au gaz fonctionnant à haute température (HTR).

Leur principal mode de ruine résiduel correspond à l'interaction forte entre le noyau fissile et les couches de gainage (mise en traction en déformation imposée de la gaine) qui est susceptible de provoquer la rupture de la gaine de confinement : de ce point de vue, la forme sphérique du gainage est la plus défavorable car elle ne laisse libre aucune direction de déformation du matériau combustible (au-delà de sa densification maximale) pour relaxer les efforts d'interaction (mise en pression hydrostatique du volume interne de la gaine).

Aussi, ce type d'élément combustible sphérique est utilisé en composites de formes diverses diluant les particules avec une très faible fraction volumique, de l'ordre de quelque %, du matériau fissile dans le volume réactif du réacteur, dans une matrice assurant le transfert thermique vers le caloporteur. En outre, par conception, on repousse le risque de rupture de gaine vers les combustions nucléaires (ou « burnup » en anglais) à fort taux.

Ainsi, au vu de ce qui précède, l'inventeur a considéré que chacun des trois types d'éléments combustibles a des avantages propres qui peuvent être résumés comme suit :
- les plaques présentent une bonne qualité de transfert thermique et d'accommodation en situation d'interaction mécanique entre pastilles de combustible et gaine,
- les éléments cylindriques (crayons) et sphériques présentent une bonne résistance à la pression des produits de fission gazeux.

Par contre, au vu de ce qui précède, on peut également considérer, que l'élément de type cylindrique (crayon) actuellement existant a pour inconvénient majeur d'avoir un comportement thermomécanique en situation d'interaction mécanique entre pastilles de combustible et gaine susceptible de ne pas être contrôlé.

L'inventeur s'est donc donné pour objectif principal d'améliorer le comportement thermomécanique des éléments combustibles de type crayon en situation d'interaction mécanique entre pastilles de combustible et gaine, actuellement utilisés dans des réacteurs de II^{ème} et III^{ème} génération.

Ces nouveaux éléments pourront également être utilisés pour les réacteurs à neutrons rapides à gaz de IV^{ème} génération.

Un but plus général de l'invention est de proposer un élément combustible de type crayon qui combine les avantages propres aux différents types d'éléments combustibles existants tels que mentionnés ci-dessus et qui lui permette de répondre au cahier des charges suivant :
1/ atteindre des fractions volumiques de combustible égales à celles des crayons à section circulaire existants,
2/ assurer un transfert thermique optimal des pastilles combustibles vers le caloporteur tout au long de la vie en se rapprochant d'une thermique de plaque (échange préférentiellement selon 2 faces opposées),
3/ éviter le risque de rupture de gaine en contrôlant l'interaction mécanique entre pastilles de combustible et gaine.

Un autre but de l'invention est de proposer un élément combustible de type crayon dont le process de fabrication ne soit pas en rupture complète avec l'outil industriel mis en place pour fabriquer les éléments combustibles actuels de type crayon à section circulaire.

### EXPOSÉ DE L'INVENTION

Pour ce faire, l'invention a pour objet un crayon de combustible nucléaire s'étendant selon une direction longitudinale comprenant une pluralité de pastilles de combustible empilées les unes sur les autres et une gaine en matériau transparent aux neutrons entourant l'empilement de pastilles, dans lequel, en section transversale à la direction longitudinale :
- la gaine présente une forme elliptique dont la paroi intérieure a un grand axe de longueur 2*a et un petit axe de longueur 2*b,
- chaque pastille de combustible nucléaire présente une forme générale elliptique tronquée aux extrémités du grand axe de la gaine, le plus petit axe de chaque pastille étant de longueur 2*b' égale à celle 2*b du petit axe de la paroi intérieure de gaine au jeu de montage j près des pastilles dans la gaine, la différence de longueur entre la moitié du grand axe tronqué des pastilles et le demi grand axe de la gaine (c-a) étant très supérieure au jeu de montage.

Par « très » supérieur au jeu de montage, il faut comprendre dans le cadre de l'invention une valeur supérieure à un jeu de montage et qui permet de ménager des volumes de vide permettant au combustible de gonfler sans interaction circonférentielle avec la gaine, comme expliqué ci-après.

Pour parvenir à la solution selon l'invention, l'inventeur a cherché à identifier les phénomènes mécaniques qui se produisent en cas d'interaction mécanique pastilles/gaine non contrôlée, c'est-à-dire en situations d'interaction mécanique instantanée dépassant la capacité de déformation de la gaine.

Ces situations peuvent avoir lieu par exemple lors de la remontée en puissance du réacteur à un niveau supérieur à celui du fonctionnement précédent ou dans un régime de fonctionnement où la température du combustible n'active pas ou peu ses mécanismes de réarrangement sur lui-même, c'est-à-dire d'auto accommodation de ses propres déformations.

Dans ces situations, un crayon de combustible à section circulaire actuellement existant présente une interaction mécanique très forte entre pastilles et gaine. En effet, les pastilles pleines de section circulaire présentent dans ces situations un gradient thermique décroissant de leur centre vers leur couronne périphérique : autrement dit, la couronne périphérique froide de la pastille lui impose une raideur radiale qui constitue en quelque sorte une raideur circonférentielle de frettage. Par ailleurs, la pastille n'accommodant que très peu par elle-même, toute souplesse radiale est empêchée. Ainsi, dans ces situations, la gaine présente une raideur circonférentielle de frettage, dite en membrane imposée par la plus grande part des déformations radiales de la pastille combustible. Autrement dit, il se produit dans cette direction radiale d'interaction, un frettage circonférentiel. La pastille ne garde alors qu'une direction de relaxation possible, la direction axiale ou longitudinale, ce qui permet localement en extrémités de chaque pastille, un fluage vers les évidements lenticulaires (ou « dishings » en anglais) ménagés à cet effet.

Aussi, l'inventeur est arrivé à la conclusion que pour améliorer le comportement thermomécanique d'un crayon de combustible en situation d'interaction mécanique pastilles/gaine très forte, il fallait mettre en oeuvre les éléments de solution suivants :
➢ diminution de la raideur de la gaine en passant de son mode de frettage circonférentiel agissant dans le cas d'une section circulaire à un mode d'ovalisation de la gaine. Ainsi, il faut rendre l'interaction mécanique radiale pastilles /gaine non axisymétrique. Il faut donc définir une section initialement ovale avec un contact mécanique possible entre pastilles et gaine seulement dans la direction d'un petit diamètre et prévoir un espace de dégagement, c'est-à-dire d'expansion de combustible, entre pastilles et gaine dans la direction d'un grand diamètre,
➢ diminution de même de la raideur de la couronne périphérique froide de la pastille en lui donnant la forme ovale qui permet de localiser les surfaces d'interaction uniquement orthogonalement au petit diamètre en sollicitant la pastille suivant un mode d'ovalisation,
➢ réalisation d'un gradient thermique de pastille non axisymétrique, se rapprochant d'un gradient thermique d'une plaque refroidie sur deux faces. Un gradient thermique non axisymétrique du combustible permet de rompre la raideur circonférentielle de la couronne périphérique froide d'une pastille à section circulaire actuellement existante en ménageant des portions plus chaudes aux extrémités du grand axe de la pastille ovale. Cet effet thermique vient contribuer à la baisse de raideur d'ovalisation que la pastille va présenter selon son petit axe,
➢ réalisation d'un volume de vide accru dans la section transversale permettant au combustible qui gonfle et se dilate de se réarranger par lui-même par fluage dans sa propre section sans générer une autre contrainte ou interaction pastilles/gaine. Pour permettre ce réarrangement par fluage, il faut que ces vides soient adjacents aux portions les plus chaudes de la pastille et que les efforts de réaction exercés sur la pastille au cours d'une interaction pastilles/gaine agissent sur ces portions les plus chaudes,
➢ conservation de l'équilibre mécanique de la section transversale du crayon soumis à la pression externe du caloporteur. En interaction mécanique pastilles/gaine très forte, la raideur d'ovalisation résultante doit permettre de maintenir en équilibre stable la géométrie de la section transversale.

Aussi, pour améliorer le comportement thermomécanique d'un crayon de combustible dans les situations d'interaction mécanique entre pastilles de combustible et gaine, l'inventeur propose tout d'abord de lui conférer une section transversale de forme elliptique.

Ensuite, l'inventeur a cherché à comprendre les autres phénomènes rencontrés dans les éléments de combustible nucléaire en fonctionnement normal des réacteurs dans lesquels ils sont utilisés.

Dans les réacteurs actuels, comme les réacteurs à eau pressurisée, les éléments combustibles de type crayon sont constitués de pastilles de combustible de forme cylindrique circulaire empilées individuellement les unes sur les autres et gainées par un tube de longueur supérieure à celle de l'empilement pour dégager en extrémités de colonne des volumes d'expansion nécessaires pour limiter la mise en pression progressive de l'empilement des pastilles de combustible sous l'effet du relâchement des gaz de fission.

Le transfert thermique entre les pastilles de combustible et le caloporteur se fait radialement à travers une résistance thermique constituée du jeu radial au montage entre pastilles et gaine, qui est rempli de gaz en début de vie, et de l'épaisseur de la gaine.

La maîtrise de cette résistance thermique tout au long de la vie de l'élément permet de garantir le respect des limites de températures acceptables dans le combustible. Aussi, l'inventeur a considéré qu'il faut mettre en oeuvre les éléments de solution suivants dans la conception de nouveaux crayons de combustible :
➢ un transfert thermique à travers un joint radial gazeux calibré en début de vie,
➢ des volumes libres ménagés dans la direction transverse à celle du transfert thermique.

Les éléments combustibles usuels de type plaque sont capables d'accommoder par la « malléabilité » de leur gainage les déformations imposées par le combustible, à très faible niveau de contraintes dans le gainage, tout en assurant le transfert thermique dans la direction de la déformation. Aussi, l'inventeur a considéré qu'il faut mettre en oeuvre un grand élancement des éléments de combustible, c'est-à-dire un rapport entre la largeur et l'épaisseur élevé, afin de leur permettre d'accommoder dans le sens de l'épaisseur, à très faible niveau de contraintes dans la gaine, les déformations imposées par le combustible.

En conséquence, l'inventeur est arrivé à la conclusion que le crayon de combustible à section elliptique selon l'invention doit mettre en oeuvre avantageusement les trois éléments de solution mentionnés ci-dessus, c'est-à-dire avec :
➢ une section transversale de forme elliptique de grand axe de longueur 2*a et de petit axe de longueur 2*b avec un coefficient d'élancement de la section a/b,
➢ une forme de la pastille également elliptique ménageant un jeu radial au montage entre pastilles et gaine calibré analogue à celui existant dans les crayons standard à section transversale circulaire,
➢ la présence de volumes libres aux extrémités du grand axe de la pastille obtenue par troncatures dudit axe.

L'inventeur est ainsi parvenu à la solution selon l'invention, à savoir des pastilles de section transversale elliptique tronquée selon leur grand axe empilées individuellement les unes sur les autres dans une gaine de section elliptique avec un jeu radial ménagé au montage le long de la portion non tronquée des pastilles et des vases d'expansion des gaz de fission aux extrémités tronquées.

Avec cette nouvelle section transversale du crayon, on obtient l'amélioration visée de comportement thermomécanique en situation d'interaction mécanique très forte entre pastilles et gaine puisque :
➢ l'interaction est limitée aux portions de contact mécanique pastilles/gaine orthogonaux au petit axe de la section transversale permettant à la gaine d'accommoder les déformations imposées par la pastille en diminuant son ovalité et en ne générant ainsi que des contraintes de flexion dans l'épaisseur de la gaine localisées dans ses portions d'extrémités selon son grand axe 2*a,
➢ un gradient thermique de pastilles favorisant un comportement mécanique plus souple de la pastille lors d'interactions,
➢ la combinaison de la forme générale elliptique de la pastille et de la présence de grands joints gazeux à ses extrémités du grand axe crée des échanges thermiques orientés préférentiellement suivant la direction du petit axe avec un noyau chaud de pastille étendu suivant le grand axe et des parties froides périphériques limitées aux portions en contact avec la gaine. La raideur mécanique qu'oppose la pastille lors d'une interaction dans la direction de son petit axe se trouve fortement réduite par la quasi absence d'effet de voûte créé par les portions périphériques froides de la pastille,
➢ la résistance thermique locale d'échange entre pastilles et gaine aux extrémités tronquées, c'est-à-dire selon les grands axes, de la pastille accroît la température des portions de surface de la pastille dans cette zone. Ainsi, en situation d'interaction mécanique avec la gaine, la pastille combustible se trouve soumise à une compression essentiellement suivant son petit diamètre, la présence d'une zone chaude jusqu'à sa surface, aux extrémités du grand axe, lui permet de se déformer par fluage préférentiellement suivant cette axe. Ce degré de liberté en extrusion par fluage vers les vides d'extrémités transversaux permet à la pastille d'accommoder ses augmentations de volume par déformation de fluage préférentiellement dans cette direction en minimisant d'autant la déformation imposée par l'interaction mécanique avec la gaine selon son petit axe.

Pour obtenir la stabilité géométrique de la section elliptique du crayon sous l'action des forces de pression externe du caloporteur s'exerçant en fonctionnement normal d'un réacteur dans lequel les crayons selon l'invention sont utilisés, l'homme du métier veillera à ajuster les paramètres de la raideur qu'exerce la pastille combustible pour s'opposer à l'aplatissement de la section transversale.

Ces paramètres peuvent être ainsi définis :
➢ le coefficient d'élancement de la section transversale (rapport grand axe/petit axe) déterminant la thermique de la pastille et donc sa raideur à l'écrasement suivant son petit axe,
➢ la dimension des cavités d'extrémités transversales selon le grand axe tronqué c de la pastille permettant de contrôler la température et donc la cinétique de déformation en fluage de la pastille selon cette direction (raideur d'extrusion vers les cavités déterminant en partie la raideur de la pastille à l'écrasement suivant son petit axe).

La nouvelle géométrie de crayon proposée selon l'invention permet donc d'assurer une stabilité géométrique de la section transversale garantissant la maîtrise du gradient et échanges thermiques de la pastille pendant le fonctionnement normal tout en permettant, par l'ajustement du coefficient d'élancement de la section et par le dimensionnement des troncatures de la pastille et donc de ses évidements aux extrémités, une accommodation des déformations imposées par la pastille à la gaine en situation d'interaction mécanique, ce qui minimise le niveau de contrainte dans la gaine par répartition des déformations imposées entre la pastille et la gaine et par le mode de sollicitation en flexion par ovalisation de la gaine.

De préférence, le jeu de montage j des pastilles dans la gaine sur toute la grande longueur du grand axe tronqué c est égal ou inférieur à 10 % de celle du grand axe 2*a de la gaine.

Lorsque le crayon selon l'invention est prévu pour un réacteur à eau pressurisée (REP), la gaine est de préférence en alliage de zirconium, en alliage M5 (ZrNbO) et les pastilles de combustible sont de préférence en matériaux céramiques tels que UO₂, (U, Pu)O₂, ou un mélange mixte à base d'oxyde d'uranium et d'oxydes de plutonium retraités.

Lorsque que le crayon selon l'invention est prévu pour un réacteur à neutrons rapides refroidi au gaz (RNR-gaz), la gaine est de préférence en matériau métallique réfractaire ou en matériau métallique semi réfractaire, comme par exemple des alliages à base de Vanadium ou en céramique ductile, comme par exemple les MAX-phases de type Ti₃SiC₂, et les pastilles de combustible sont de préférence en matériaux céramiques tels que (U, Pu) C, (U, Pu)O₂.

L'invention concerne également un assemblage de combustible nucléaire comprenant une pluralité de crayons de combustible tels que décrits précédemment et agencés entre eux selon un réseau.

L'invention concerne également une gaine en matériau transparent aux neutrons, s'étendant selon une direction longitudinale et ayant une forme elliptique en section transversale à sa direction longitudinale.

L'invention concerne aussi une pastille de combustible nucléaire qui s'étend selon une direction longitudinale et, de forme générale elliptique tronquée avec un grand axe tronqué en section transversale à sa direction longitudinale.

L'invention concerne également un procédé de fabrication d'une pastille de combustible de hauteur H selon sa direction longitudinale et, de forme générale elliptique tronquée avec un grand axe tronqué de longueur 2*c et un petit axe de longueur 2*b' en section transversale à la direction longitudinale, selon lequel on réalise les étapes suivantes :
- préparation de la poudre de combustible dite étape de pastillage,
- pressage de la poudre de combustible sur le chant de la pastille crue, dans un jeu de matrices de hauteur H et de section transversale en forme elliptique tronquée avec une grande longueur 2*c et une plus petite longueur 2*b',
- frittage de la pastille de combustible pressée.

On précise ici que la notion de pastille crue signifie que la pastille n'est pas frittée.

Avantageusement, le rapport H/(2*c) entre la hauteur H et la grande longueur 2*c, est au moins égal à 1,2.

Ainsi, la nouvelle géométrie de crayon de combustible proposée selon l'invention permet également des améliorations potentielles en termes de fabrication des pastilles de combustible. La forme elliptique tronquée de la section transversale des pastilles de combustible permet en effet d'envisager les deux améliorations décrites ci-dessus du processus de fabrication et formulées autrement ci-après :
➢ en ce qui concerne le mode de pressage des pastilles : la nouvelle forme des pastilles permet d'envisager l'axe de pressage dans la direction du petit axe de la section elliptique (au lieu d'un axe de pressage dans l'axe du cylindre comme pour les pastilles connues à section circulaire). Ce nouveau mode de pressage peut permettre une meilleure maîtrise de l'homogénéité de la densité de pressage et donc de la géométrie de la pastille frittée,
➢ suppression de la rectification de calibrage du diamètre des pastilles : la nouvelle forme de la section transversale elliptique du crayon assure en fonctionnement un placage de la gaine sur les faces (orthogonales au petit axe) de la pastille par l'effet de la pression externe dès la première montée en température du caloporteur dans le réacteur. La thermique de la pastille est donc insensible au jeu initial au montage entre pastilles et gaine. Ainsi, contrairement à l'état de l'art, le calibrage des cotes de pastilles n'est plus nécessaire, les tolérances géométriques obtenues brutes de frittage devenant acceptables (d'autant plus avec l'amélioration du mode de pressage envisagée ci-dessus).

Aussi, l'invention concerne aussi un procédé d'empilement de pastilles de combustibles dans une gaine en matériau transparent aux neutrons afin de réaliser un crayon de combustible nucléaire, dans lequel on empile les pastilles de combustible brutes de frittage obtenues directement selon le procédé de fabrication décrit précédemment à l'intérieur d'une gaine de forme générale elliptique dont la paroi intérieure a un petit axe de longueur 2*b égal à celle du petit axe 2*b' des pastilles au jeu de montage près, la différence de longueur entre la moitié du grand axe tronqué des pastilles et le demi grand axe de la gaine (c-a) étant très supérieure au jeu de montage j.

### BRÈVE DESCRIPTION DES DESSINS

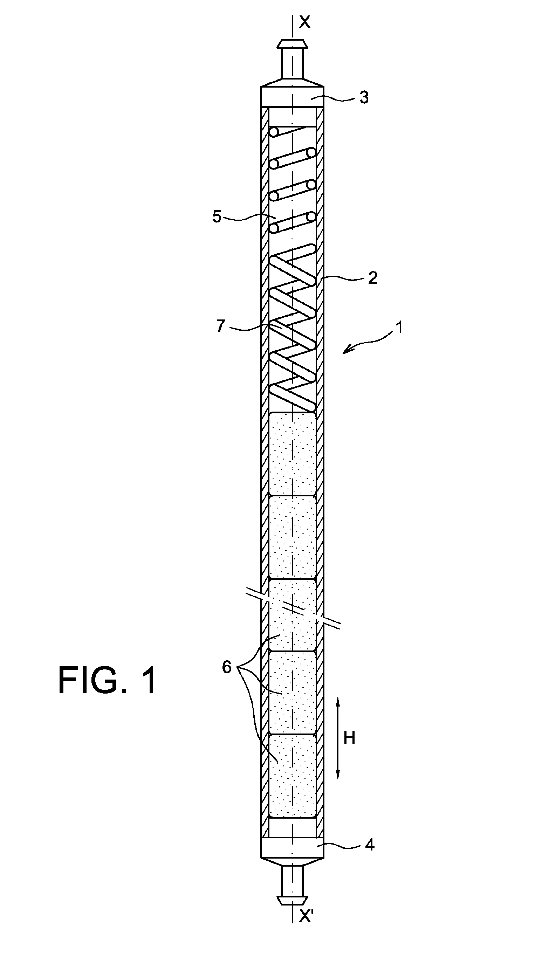

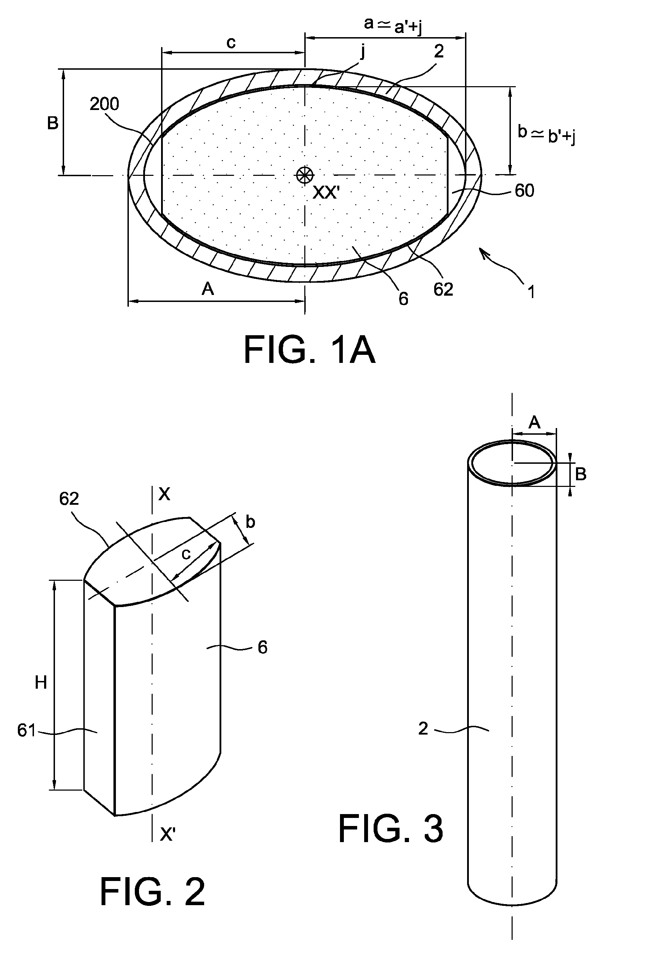

D'autres avantages et caractéristiques de l'invention ressortiront mieux à la lecture de la description détaillée d'un crayon de combustible nucléaire selon l'invention faite en référence aux figures 1 et 1A suivantes parmi lesquelles :
- la figure 1 est une vue en coupe longitudinale partielle d'un crayon de combustible nucléaire selon l'invention,
- la figure 1A est une vue en coupe transversale du crayon de combustible nucléaire selon la figure 1,
- la figure 2 est une vue en perspective d'une pastille de combustible nucléaire conforme à l'invention,
- la figure 3 est une vue en perspective d'une gaine conforme à l'invention pour loger un empilement de pastilles selon la figure 2.

### EXPOSÉ DÉTAILLÉ DE MODES DE RÉALISATION PARTICULIERS

Par souci de clarté, les axes longitudinaux selon lesquels s'étendent les pastilles 6 et la gaine 2, ainsi que le crayon 1 regroupe ces éléments, sont tous référencés XX'.

On précise ici que :
- les cotes a et b se rapportent aux cotes internes de la gaine elliptique 2,
- les cotes A et B se rapportent aux cotes externes de la gaine elliptique 2,
- les cotes a' et b' se rapportent à une pastille 6 non tronquée,
- la cote 2*c se rapporte à la grande longueur de la pastille de combustible 6 tronquée conformément à l'invention.

En figure 1, on voit un crayon de combustible nucléaire 1 selon l'invention qui est représenté dans sa configuration d'utilisation dans un réacteur nucléaire, c'est-à-dire en position verticale avec les pastilles 6 vers la partie inférieure comme précisé ci-dessous.

Le crayon 1 est constitué d'une gaine 2 en alliage de zirconium fermé à chacune de ses extrémités par un bouchon respectivement supérieur 3 et inférieur 4.

L'intérieur de la gaine est essentiellement divisé en deux compartiments, dont l'un 5 en partie haute constitue une chambre d'expansion de gaz et l'autre 6 loge la colonne fissile formée par l'empilement de pastilles de combustible nucléaire 6 qui s'étendent chacune selon la direction longitudinale XX' du crayon 1.

Dans l'empilement représenté, chaque pastille 6 a sensiblement la même hauteur H.

Un ressort hélicoïdal de compression 7 est logé dans la chambre d'expansion 5 avec son extrémité inférieure en appui contre l'empilement des pastilles 6 et son autre extrémité en appui contre le bouchon 3 supérieur.

En sus du maintien de l'empilement de pastilles 6 selon l'axe longitudinal XX' et « l'absorption » au cours du temps du gonflement longitudinal des pastilles 6, l'autre fonction de ce ressort 7 est d'empêcher le flambage de la section de la gaine sur son mode d'ovalisation.

Autrement dit, il doit empêcher l'extrême ovalisation de la section de la gaine.

La figure 1A montre une section transversale droite du crayon 1 de la figure 1.

La gaine 2 selon l'invention est d'épaisseur constante sur toute sa périphérie et de forme générale elliptique. Plus exactement, la paroi intérieure 200 de la gaine 2 de forme elliptique présente un grand axe de longueur 2*a et un petit axe de longueur 2*b.

La pastille de combustible 6 est également de forme elliptique tronquée à chacune des extrémités du grand axe de la gaine. Autrement dit, la pastille 6 présente un grand axe tronqué de longueur 2*c et un petit axe de longueur 2*b'.

On précise ici que la cote c définit la distance du plan de troncature de la pastille 6 par rapport à son centre.

Un jeu radial uniforme j de montage entre la pastille 6 et la gaine 2 est défini sur les côtés elliptiques de la pastille, c'est-à-dire sur toute la longueur 2*c de celle-ci. Autrement dit, une fois fabriqué et avant son utilisation en tant que matière fissile dans un réacteur nucléaire, chaque pastille 6 de combustible présente une section transversale elliptique tronquée dont le demi petit axe b' est de longueur sensiblement égale à celle du demi petit axe b de la paroi intérieure 200 de gaine 2, au jeu de montage près j.

Des volumes libres ou autrement dit des vides d'expansion 60 sont ainsi situés aux deux extrémités du grand axe tronqué de la pastille 6, c'est-à-dire entre les bords tronqués 61 de la pastille 6 et la paroi intérieure 200 de la gaine 2.

Ainsi, le paramétrage de la section transversale du crayon 1 de combustible s'exprime à partir des caractéristiques de la pastille 6 définies par :
➢ son facteur d'ovalité ou facteur d'élancement « a'/b'», avec a' = a-j,
➢ son taux de troncature « c/a'».

L'inventeur considère que pour parvenir à une thermique satisfaisante, typiquement celle d'une plaque comme décrite dans la demande WO2007/017503, le facteur d'élancement a'/b' doit être au moins égal à 1, 5.

On peut envisager d'utiliser le crayon 1 à section elliptique selon l'invention dans deux catégories de réacteurs nucléaires fonctionnant avec un fluide caloporteur de refroidissement du coeur maintenu en surpression par rapport aux éléments combustibles.

La première application visée est l'utilisation spécifique aux conditions de fonctionnement des réacteurs de la filière à eau pressurisée (REP).

Le crayon peut alors être réalisé dans des matériaux constitutifs à priori les mêmes que ceux utilisés pour la conception des éléments combustibles standard actuels, tels que les crayons à section circulaire actuellement connus: alliages de zirconium ou alliage M5 (ZrNbO) pour les gaines et pastilles de combustible en céramique UO₂ ou un mélange mixte à base d'oxyde d'uranium et d'oxydes de plutonium retraités.

La deuxième application visée est l'utilisation spécifique aux conditions de fonctionnement des réacteurs à neutrons rapides refroidis au gaz (RNR-gaz), conditions selon lesquelles les températures de gaine atteintes sont élevées dans la gamme de 300 °C à 900 °C et la fluence neutronique en neutrons rapides est élevée. Le crayon peut alors être utilisé dans des matériaux constitutifs suivants : métal réfractaire ou semi réfractaire, comme des alliages à base de Vanadium ou céramique ductile, comme les MAX-phases de type Ti₃SiC₂ pour la gaine et pastilles de combustible en céramique (U, Pu) C ou (U, Pu) O₂.

Un mode de réalisation particulier d'un crayon de section elliptique selon l'invention est décrit ci-après. Dans ce mode, le dimensionnement du crayon 1 est fait pour satisfaire aux conditions de fonctionnement d'un réacteur à eau pressurisé (REP) standard.

Les géométries, les matériaux et les conditions de fonctionnement du réacteur REP Standard prises en référence sont les suivantes :
➢ Dimensions d'un crayon à section circulaire connu :
   Gaine : diamètre extérieur Dext = 9,5 mm,
   diamètre intérieur Dint = 8,36 mm,
   Pastilles de combustible : diamètre = 8,2 mm,
➢ Matériaux :
   Gaine en alliage M5,
   Pastilles de combustible UO₂,
➢ Conditions de fonctionnement :
   Température sur la paroi externe de gaine, T = 342 °C, Pression du caloporteur P = 155 bars,
   Puissance volumique du combustible = 320 W/cm³,
➢ Taux de combustion = 60 000 MWj/t.

Sur la base de ces données de référence d'un crayon à section circulaire connu, l'inventeur a proposé le dimensionnement du nouveau crayon elliptique selon l'invention suivant :
➢ section de la pastille égale à celle de la pastille de section circulaire standard ;
➢ facteur d'ovalité a' /b' = 1,8 ;
➢ taux de troncature valant c/a' = 0,9, soit des cotes suivantes a', b', c telles que représentées pour le crayon 1 :
   a' = 5,61 mm ;
   b' = 3,115 mm ;
   c = 5,05 mm.
➢ épaisseur de gaine de 0,57 mm égale à celle de la gaine de section standard ;
➢ jeu radial au montage égal au jeu radial au montage entre pastilles et gaine d'un crayon à section circulaire standard j ≃ 0,08mm (ce jeu j au montage entre pastilles 6 et gaine 2 dans le crayon selon l'invention est suivant le petit axe b de l'ellipse, soit des cotes suivantes de la section elliptique de la gaine :
   grand diamètre interne 2*a = 5,69 mm ;
   petit diamètre interne 2*b = 3,195 mm ;
   grand diamètre externe 2*A = 6,26 mm ;
   petit diamètre externe 2*B = 3,765 mm.

En comparaison de la géométrie de référence d'un crayon à section circulaire standard pour réacteur à eau pressurisée (REP), le crayon de section elliptique 1 selon l'invention présente une section totale accrue de l'ordre de 4,4 % avec un pourcentage surfacique de combustible dans la gaine de l'ordre de 92,5 %.

Ainsi, le vide total j, 60 ménagé respectivement par le jeu radial initial au montage j entre pastilles 6 et gaine 2 et par les troncatures 61 des extrémités de la pastille 6 (espace de vide 60 entre bords tronqués 61 et paroi interne de gaine 20) représente environ 7,47 % de la section transverse interne de la gaine égale à Π*a*b.

D'un point de vue fabrication, la réalisation d'une gaine 2 de section elliptique ne pose pas de problème particulier.

Pour la réalisation de la pastille 6, il est possible d'envisager une nouvelle opération de pressage. En effet, l'élancement a'/b' considéré dans l'invention, égal à 1,8 avec les dimensions données ci-dessus permet d'envisager le pressage de chaque pastille non plus suivant son axe cylindrique XX' comme actuellement réalisé pour les crayons à section transversale circulaire, mais orthogonalement, c'est-à-dire dans la direction du petit axe a' de sa section elliptique ou autrement dit sur son chant délimité par sa hauteur H.

La forme elliptique du gainage permet en outre d'envisager l'engainage des pastilles brutes de frittage. En effet, l'inventeur pense qu'un pressage de la pastille de combustible selon son chant H doit assurer une dispersion moindre des cotes d'épaisseur des pastilles frittées par une meilleure homogénéisation des densités de pressage au sein de la pastille.

Comme exposé ci-dessus, en fonctionnement d'un réacteur REP, la forme elliptique de la gaine doit permettre un placage de la gaine sur les faces de pastilles (hors les vides d'extrémités 60), c'est-à-dire sur toute la longueur 2*c, dès la mise en pression du caloporteur.

Dès le début de vie, la thermique des pastilles 6 ne dépend plus du jeu initial au montage entre pastilles 6 et gaine 2.

L'analyse du comportement thermique et thermomécanique d'un crayon 1 à section elliptique selon l'invention dans les conditions de fonctionnement de référence d'un REP, a été faite par simulation numérique avec le code aux éléments finis CAST3M.

Cette simulation a pris comme hypothèses une puissance du combustible constante au cours de la vie, l'évolution des propriétés physiques des matériaux de gaine M5 et du combustible UO₂ en fonction de la température, le comportement viscoélastique du matériau de gaine et du combustible (fluage thermique et d'irradiation), le gonflement des matériaux en irradiation et un taux de relâchement des gaz de fission produits par le combustible de l'ordre 6 % (ce qui correspond à une valeur courante rencontrée pour des crayons à section circulaires pour un taux de combustion de 60000 MWj/t).

Les résultats montrent pour un fonctionnement avec ce taux de combustion de 60000 MWj/t :
➢ une bonne maîtrise de la thermique du combustible au cours de la vie : dès la mise en puissance, le jeu radial j entre pastilles 6 et gaine 2 se ferme et la température maximale du combustible évolue entre une température de début de vie de 683°C à une température de fin de vie de 904°C.

Cette évolution est due à la dégradation de la conductibilité du combustible par l'irradiation et à la présence des gaz de fission relâchés par le combustible qui dégradent le coefficient d'échange thermique pastilles 6/gaine 2.

De part la forme elliptique de la section, la dimension de la pastille dans la direction de l'échange thermique (son petit diamètre) étant plus petite que le diamètre d'une pastille de section circulaire de même surface, la température maximale à coeur du combustible est plus basse que dans un crayon à section circulaire standard.
➢ un bon comportement thermomécanique global sur la section transversale de la pastille de combustible. Cela se traduit par une maîtrise des déformations de la section, le fluage de la section elliptique de la pastille combustible étant contrôlé par la température de surface obtenue par la résistance thermique constituée par les vides 60 ménagés aux extrémités tronquées 61 de la pastille.

En début de vie, la surchauffe locale (au niveau des bords 61) est de 136 °C par rapport à la température des surfaces d'échange (au niveau des portions 62) au contact de la gaine.

En fin de vie, la surchauffe locale atteint (entre les bords tronqués 61 et portions 62) est de 220°C.

Cet équilibre thermique qui pilote la stabilité mécanique de la section est obtenu par optimisation des paramètres géométriques de la section : son facteur d'ovalité a/b et son taux de troncature c/a. Il va de soi que ces paramètres dépendent de chaque utilisation et leur optimisation dépend des conditions de fonctionnement de chaque pastille de combustible et des propriétés mécaniques des matériaux constitutifs, notamment des lois de comportement en fluage thermique et d'irradiation.

Le bon comportement thermomécanique se traduit également par une maîtrise de la pressurisation interne du crayon par les gaz de fission relâchés par le combustible.

La présence des vides 60 aux extrémités tronquées 61 de la pastille constitue des vases d'expansion supplémentaires par rapport à un crayon de section circulaire standard.

Enfin, le bon comportement thermomécanique se traduit par une interaction mécanique entre pastilles 6 et gaine 2 qui met en flexion cette dernière.

Les contraintes de flexion induites sont localisées dans les secteurs d'extrémités 200 de la gaine en regard des troncatures 61 de la pastille de combustible.

Le fluage de la gaine 2 limite ces contraintes à une valeur inférieure à 100 MPa en fonctionnement.

La gaine se trouve donc bien sollicitée uniquement en flexion sur son mode d'ovalisation : elle ne passe pas en mode de frettage circonférentiel comme est susceptible de le faire une gaine de crayon à section circulaire standard.

La pastille de combustible 6 quant à elle adapte ses déformations de section principalement en s'extrudant par fluage vers les vides d'extrémités 60 sous l'action des raideurs d'ovalisation de la section elliptique tronquée de la pastille qui s'opposent ainsi aux déformations de dilatation et de gonflement.

D'autres améliorations et modifications peuvent être envisagées sans pour autant sortir du cadre de l'invention :
- pour une application dans des réacteurs à eau pressurisée REP actuellement en service, on peut envisager l'utilisation de matériaux standard, à savoir une gaine 2 en alliage de zirconium et des pastilles de combustibles 6 en UO₂ ou en mélange mixte à base d'oxydes d'uranium appauvri et d'oxydes plutonium retraités aussi appelés Mox. Une optimisation des performances du crayon sera obtenue à partir de la maîtrise des comportements en fluage des matériaux de gaine et du combustible du crayon à section elliptique selon l'invention,
- pour une application dans des réacteurs refroidis aux neutrons rapides par un gaz (RNR-gaz), l'utilisation d'une gaine ductile est à rechercher, dans la gamme des matériaux métalliques et céramiques ductiles, comme décrit précédemment.

## Revendications

1. Crayon de combustible nucléaire (1) s'étendant selon une direction longitudinale (XX') comprenant une pluralité de pastilles (6) de combustible empilées les unes sur les autres et une gaine (2) en matériau transparent aux neutrons entourant l'empilement de pastilles, dans lequel, en section transversale à la direction longitudinale (XX') :
- la gaine présente une forme générale elliptique dont la paroi intérieure (200) a un grand axe de longueur 2*a et un petit axe de longueur 2*b,
- chaque pastille (6) de combustible nucléaire présente une forme elliptique tronquée aux extrémités du grand axe de gaine, le plus petit axe de chaque pastille étant de longueur 2*b' égale à celle 2*b du petit axe de la paroi intérieure de gaine, au jeu de montage près j des pastilles dans la gaine, sur toute la grande longueur du grand axe tronqué 2*c, la différence de longueur entre la moitié du grand axe tronqué des pastilles et le demi-grand axe de la gaine (c-a) étant très supérieure au jeu de montage j.

2. Crayon de combustible nucléaire selon la revendication 1, dans lequel le jeu de montage j des pastilles dans la gaine sur toute la grande longueur du grand axe tronqué 2*c est égal ou inférieur à 10 % de celle du grand axe 2*a de la gaine.

3. Crayon de combustible selon l'une quelconque des revendications précédentes pour un réacteur à eau pressurisée (REP), dans lequel la gaine est en alliage de zirconium, en alliage M5 (ZrNbO) et les pastilles de combustible en matériaux céramiques tels que UO₂, (U, Pu)O₂ ou un mélange mixte à base d'oxyde d'uranium et d'oxydes de plutonium retraités.

4. Crayon de combustible selon l'une des revendications 1 ou 2, pour un réacteur à neutrons rapides refroidi au gaz (RNR-gaz), dans lequel la gaine est en matériau métallique réfractaire ou en matériau métallique semi réfractaire, comme par exemple des alliages à base de Vanadium ou en céramique ductile, comme par exemple les MAX-phases de type Ti₃SiC₂, et les pastilles de combustible sont en matériaux céramiques tels que (U, Pu) C, (U, Pu)O₂.

5. Assemblage de combustible nucléaire comprenant une pluralité de crayons de combustible selon l'une quelconque des revendications précédentes et agencés entre eux selon un réseau.

6. Pastille (6) de combustible nucléaire s'étendant selon une direction longitudinale (XX') et, ayant une forme générale elliptique tronquée avec un grand axe tronqué en section transversale à la direction longitudinale (XX').

7. Procédé de fabrication d'une pastille de combustible nucléaire (6) de hauteur H selon sa direction longitudinale (XX') et, de forme elliptique tronquée avec un grand axe tronqué de longueur 2*c et un petit axe de longueur 2*b' en section transversale à la direction longitudinale (XX'), selon lequel on réalise les étapes suivantes :
- préparation de la poudre de combustible, dite étape de pastillage,
- pressage de la poudre de combustible sur le chant de la pastille crue, dans un jeu de matrices de hauteur H et de section transversale en forme elliptique tronquée avec une grande longueur 2*c et une plus petite longueur 2*b',
- frittage de la pastille de combustible pressée.

8. Procédé de fabrication selon la revendication 7, dans lequel le rapport H/(2*c) entre la hauteur H et la grande longueur 2*c, est au moins égal à 1,2.

9. Procédé d'empilement de pastilles (6) de combustibles dans une gaine (2) en matériau transparent aux neutrons afin de réaliser un crayon de combustible nucléaire, dans lequel on empile les pastilles de combustible brutes de frittage obtenues directement selon le procédé de fabrication selon la revendication 7 ou 8 à l'intérieur d'une gaine de forme générale elliptique dont la paroi intérieure a un petit axe de longueur 2*b égal à celle du petit axe 2*b' des pastilles au jeu de montage près j, la différence de longueur entre la moitié du grand axe tronqué des pastilles et le demi grand axe de la gaine (c-a) étant très supérieure au jeu de montage j.

## Patentansprüche

1. Kernbrennstab (1), der sich gemäß einer Längsrichtung (XX') erstreckt, eine Vielzahl aufeinandergestapelter Brennstofftabletten (6) und eine den Tablettenstapel umgebende Hülle (2) aus neutronendurchlässigem Material umfasst und bei dem in einem zu der Längsrichtung (XX') transversalen Querschnitt :
- die Hülle eine generell elliptische Form aufweist, deren Innenwand (200) eine groβe Achse der Länge 2*a und eine kleine Achse der Länge 2*b aufweist,
- jede Kernbrennstofftablette (6) eine elliptische, an den Enden der großen Hüllenachse abgestumpfte Form aufweist, wobei die kleinere Achse jeder Tablette bis auf das Montagespiel j der Tablette in der Hülle über die gesamte große Länge der großen abgestumpften Achse 2*c eine Länge 2*b' gleich derjenigen 2*b der kleinen Achse der Hüllen-Innenwand aufweist, wobei die Längendifferenz zwischen der Hälfte der abgestumpften großen Achse der Tabletten und der Halbachse der Hülle (c-a) sehr viel größer ist als das Montagespiel j.

2. Kernbrennstab nach Anspruch 1, bei dem das Montagespiel j der Tabletten in der Hülle über die gesamte große Länge der abgestumpften großen Achse 2*c 10% oder weniger von der (Länge) der großen Achse 2*a der Hülle beträgt.

3. Kernbrennstab nach einem der vorhergehenden Ansprüche für einen Druckwasserreaktor (DWR), bei dem die Hülle aus einer Zirkon-Legierung des Legierungstyps M5 (ZrNbO) ist und die Brennstofftabletten aus einem keramischen Material wie zum Beispiel UO₂, (U, Pu)O₂ oder einer Mischung auf der Basis von wiederaufbereitetem Uran-Oxid und Plutonium-Oxid sind.

4. Kernbrennstab nach einem der Ansprüche 1 oder 2 für einen gasgekühlten schnellen Neutronenreaktor (SNR-Gas), bei dem die Hülle aus einem refraktären Material oder einem semi-refraktären Material wie zum Beispiel Legierungen auf der Basis von Vanadium ist, oder aus duktiler Keramik wie zum Beispiel den MAX-Phasen des Typs Ti₃SiC₂ ist, und die Kernbrennstofftabletten aus keramischen Materialien wie zum Beispiel (U, Pu) C, (U, Pu)O₂ sind.

5. Kernbrennstoffbündel, eine Vielzahl von Brennstäben nach einem der vorhergehenden Ansprüche umfassend, die zusammen eine gitterförmige Anordnung bilden.

6. Kernbrennstofftablette (6), die sich entsprechend einer Längsrichtung (XX') erstreckt und generell eine abgestumpfte elliptische Form aufweist, deren große Achse in einem zu der Längsrichtung (XX') transversalen Querschnitt abgestumpft ist.

7. Verfahren zur Herstellung einer Kernbrennstofftablette (6) mit der Höhe H gemäß seiner Längsrichtung (XX') und von abgestumpft-elliptischer Form mit einer abgestumpften groβen Achse der Länge 2*c und einer kleinen Achse der Länge 2*b' in einem zu der Längsrichtung (XX') transversalen Querschnitt, gemäß dem man die folgenden Schritte ausführt:
- Herstellung des Brennstoffpulvers, Tablettierschritt genannt,
- Pressen des Brennstoffpulvers auf die Schmalseite der rohen Tablette, in einem Matrizensatz bzw. einer Matrizengarnitur mit der Höhe H und einem Querschnitt von abgestumpft-elliptischer Form mit einer großen Länge 2*c und einer kleineren Länge 2*b',
- Sintern der gepressten Brennstofftablette.

8. Herstellungsverfahren nach Anspruch 7, bei dem das Verhältnis H/(2*c) zwischen der Höhe H und der großen Achse 2*c mindestens gleich 1,2 ist.

9. Verfahren zum Stapeln von Brennstofftabletten (6) in einer Hülle (2) aus neutronendurchlässigem Material, um einen Kernbrennstoffstab herzustellen, bei dem man die sinterrohen Brennstofftabletten, hergestellt gemäß Anspruch 7 oder 8, in einer Hülle von generell elliptischer Form stapelt, deren Innenwand eine kleine Achse mit einer Länge 2*b hat, die, bis auf das Montagespiel j, derjenigen der kleinen Achse 2*b' der Tabletten entspricht, wobei die Längendifferenz zwischen der Hälfte der abgestumpfte großen Achse der Tabletten und der halben großen Achse der Hülle (c-a) sehr viel größer ist als das Montagespiel j.

## Claims

1. Nuclear fuel rod (1) extending along a longitudinal direction (XX') comprising a plurality of fuel pellets (6) stacked on each other and a cladding (2) made of a material transparent to neutrons surrounding the stack of pellets in which, in the section transverse to the longitudinal direction (XX'):
- the cladding is generally elliptical in shape and the inside surface (200) has a major axis with length 2*a and a minor axis with length 2*b,
- each nuclear fuel pellet (6) is generally elliptical in shape truncated at the ends of the major axis of the cladding, the minor axis of each pellet being of length 2*b' equal to length 2*b of the minor axis of the inside surface of the cladding except for the assembly clearance j of the pellets in the cladding, over the length of the truncated major axis 2*c, the difference in length between half of the truncated major axis of the pellets and half of the major axis of the cladding (c-a) being very much larger than the assembly clearance j.

2. Nuclear fuel rod according to claim 1, in which the assembly clearance j of the pellets in the cladding over the length of the truncated major axis 2*c is less than or equal to 10% of the length of the major axis 2*a of the cladding.

3. Fuel rod according to any one of the previous claims for a pressurised water reactor (PWR), in which the cladding is made of a zirconium alloy or an M5 alloy (ZrNbO) and the fuel pellets are made of ceramic materials such as UO₂, (U, Pu)O₂ or a mixture based on uranium oxide and retreated plutonium oxides.

4. Fuel rod according to one of claims 1 or 2, for a gas-cooled fast reactor (GCFR), in which the cladding is made of a refractory or semi-refractory metallic material, for example like Vanadium-based alloys or a ductile ceramic, for example such as MAX-phases of the Ti₃SiC₂ type, and the fuel pellets are made of ceramic materials like (U, Pu) C, (U, Pu)O₂.

5. Nuclear fuel assembly comprising a plurality of fuel rods according to any one of the previous claims and arranged together in a lattice.

6. Nuclear fuel pellet (6) extending along a longitudinal direction (XX') and with a generally, truncated elliptical shape with a truncated major axis in the section transverse to the longitudinal direction (XX').

7. Method of manufacturing a nuclear fuel pellet (6) with height H along its longitudinal direction (XX') and with a truncated elliptical shape with a truncated major axis with length 2*c and a minor axis with length 2*b' in its section transverse to the longitudinal direction (XX'), in which the following steps are performed:
- prepare the fuel powder in the so-called pelleting step,
- compress the fuel powder on the edge of the raw pellet, in a set of dies with height H and with a truncated elliptical cross section with a major length 2*c and a minor length 2*b',
- sinter the compressed fuel pellet.

8. Manufacturing method according to claim 7, in which the H/ (2*c) ratio between the height H and the major length 2*c is equal to at least 1.2.

9. Method of stacking fuel pellets (6) in a cladding (2) made of a material transparent to neutrons so as to make a nuclear fuel rod, in which as-sintered fuel pellets made directly using the fabrication process according to claim 7 or 8 are stacked inside a generally elliptical shaped cladding in which the length of the minor axis 2*b of the inside surface is the same as the length 2*b' of the minor axis of the pellets except for the assembly clearance j, the difference in length between half of the truncated major axis of the pellets and half of the major axis of the cladding (c-a) being very much larger than the assembly clearance j.
